# FASCICULE DE BREVET EUROPEEN

(11) **EP 2 591 407 B1**
(45) Date de publication et mention de la délivrance du brevet: **29.03.2017**
(21) Numéro de dépôt: 11733617.2
(22) Date de dépôt: 04.07.2011
(51) Int. Cl.: G06F 3/01, G06F 3/0338, G06F 3/0354

(54) **SYSTÈME DE SIMULATION D'UN CONTACT AVEC UNE SURFACE PAR STIMULATION TACTILE**
SYSTEM ZUR SIMULATION EINES KONTAKTS MIT EINER OBERFLÄCHE DURCH TAKTILE STIMULATION
SYSTEM FOR SIMULATING A CONTACT WITH A SURFACE BY TACTILE STIMULATION

(30) Priorité: 06.07.2010 FR 1055479
(43) Date de publication de la demande: 15.05.2013
(73) Titulaire: Commissariat à l'Énergie Atomique et aux Énergies Alternatives, 75015 Paris (FR)
(72) Inventeur: WIERTLEWSKI, Michaël, Evanston Illinois 60202 (US); HAYWARD, Vincent, F-75013 Paris (FR); LOZADA, José, F-91300 Massy (FR)
(74) Mandataire: Ilgart, Jean-Christophe
(86) Numéro de dépôt international: PCT/EP2011/061184
(87) Numéro de publication internationale: WO 2012/004214

(56) Documents cités:
- US-A1- 2006 022 952
- US-A1- 2006 115 348
- US-A1- 2009 036 212
- US-A1- 2009 278 798
- US-A1- 2010 108 408
- US-B1- 6 747 631

## Description

### DOMAINE TECHNIQUE ET ART ANTÉRIEUR

La présente invention se rapporte à un système de simulation d'un contact avec une surface par stimulation tactile, par exemple pour simuler la rugosité ou la préhension d'un objet, destiné par exemple à être utilisé en tant qu'interface tactile dans le domaine de la réalité virtuelle ou en tant qu'interface sensorielle dans les domaines divers tels que les transports, la téléphonie, l'informatique...

Le document US2009/0036212 décrit un système pour fournir des informations tactiles. Le système est muni d'une surface mobile selon deux directions, destinée à générer des forces de cisaillement sur la pulpe des doigts et donnant des indications sur la direction. Cependant, ce type de système n'est pas apte à générer une sensation fidèle de la texture, et ne permet pas de simuler une rugosité de surface.

Il existe également des gants de réalité virtuelle. L'un d'eux est décrit dans le document US 6 275 213. Celui-ci comporte des vibreurs au niveau des extrémités des doigts. Lorsque l'entrée en contact d'un doigt avec un objet virtuel doit être simulée, le vibreur est actionné et provoque une vibration mono-fréquentielle au niveau du doigt concerné. Cependant cette information est uniquement métaphorique et n'offre pas à l'utilisateur un ressenti réaliste.

Il existe également des systèmes, tels que celui décrit dans le document US 5 583 478, comportant des picots stimulant la pulpe des doigts par indentation. Cependant la stimulation locale ne permet pas de simuler correctement par exemple la prise d'objets.

Il existe encore d'autres systèmes de stimulation tactile, comme ceux décrits dans les documents: US 6 747 631, US 2010/108408, US 2009/278798, US 2006/115348, US 2006/022952.

C'est par conséquent un but de la présente invention d'offrir un système de simulation du contact avec une surface par stimulation tactile fournissant une sensation réaliste pour l'utilisateur.

### EXPOSÉ DE L'INVENTION

Le but précédemment énoncé est atteint par un système ou un procédé selon les revendications indépendantes. Un tel système comporte une surface avec laquelle est destinée à entrer en contact une zone de la peau de l'utilisateur, ladite surface étant apte à être déplacée selon au moins une direction, avantageusement deux directions orthogonales entre elles de telle sorte qu'elle génère des forces de cisaillement selon la ou les deux directions au niveau de la zone de la peau. En outre, le système comporte des actionneurs électromagnétiques disposés autour d'un élément mobile supportant ladite surface pour déplacer ladite surface le long de la direction ou des directions orthogonales, ceux-ci étant aptes à fournir une fréquence de stimulation élevée, ce qui permet de retranscrire, de manière réaliste, les interactions dynamiques du touché, par exemple la texture d'une surface. Le système selon la présente invention est alors capable de générer un rendu de la texture tactile d'une surface de très bonne qualité.

Par exemple, les actionneurs sont aptes à fournir une fréquence de stimulation comprise entre 0 Hz et 1200 Hz.

En d'autres termes, les actionneurs électromagnétiques permettent d'avoir un rafraîchissement très rapide de la stimulation appliquée à la zone de peau via le déplacement de la surface de stimulation, ce qui permet de simuler de manière particulièrement réaliste une modification de la texture d'une surface.

Dans un mode particulier, la surface est également apte à être déplacée selon un axe orthogonal à la surface, appliquant ainsi une force normale à la zone de peau orientée de sorte à la déformer. Le système permet alors de générer une stimulation locale par indentation. Il est alors possible de simuler la préhension d'objets par une main, la zone de peau est alors par exemple la pulpe des doigts et le système est alors prévu pour au moins deux doigts. En exerçant un effort normal à la surface des doigts, l'effort de serrage est simulé et en appliquant des efforts tangentiels à la surface des doigts, le poids de l'objet est simulé. Le glissement est simulé par une variation des efforts tangentiels.

De manière avantageuse, la surface est supportée par des moyens de support déformables élastiquement dans la ou les directions de déplacement, assurant de manière simple le ou les deux degrés en translation souhaités et formant des moyens de rappel en position d'équilibre de la surface.

La présente invention a alors pour objet un système de simulation d'un contact avec une surface par stimulation tactile comportant une surface de stimulation destinée à entrer en contact avec une zone de peau d'un utilisateur, ledit système comportant des moyens pour déplacer la surface de stimulation selon au moins une première direction sensiblement tangente à la zone de peau, lesdits moyens de déplacement étant commandés en fonction de la simulation à générer, dans lequel lesdits moyens de déplacement sont des actionneurs électromagnétiques.

De manière très avantageuse, les moyens pour déplacer la surface de stimulation sont également aptes à déplacer la surface de stimulation selon une deuxième direction orthogonale à la première direction et sensiblement tangente à la zone de peau.

Dans un exemple de réalisation, les moyens pour déplacer la surface de stimulation comportent trois actionneurs électromagnétiques disposés sur un cercle, répartis autour d'un élément mobile supportant la surface de stimulation, à 120° les uns des autres.

Dans un autre exemple de réalisation, les moyens pour déplacer la surface de stimulation comportent quatre actionneurs électromagnétiques, deux actionneurs étant disposés le long de la première direction de déplacement de part et d'autre d'un élément mobile supportant la surface de stimulation et deux actionneurs étant disposés le long de la deuxième direction de déplacement de part et d'autre de l'élément mobile supportant la surface de stimulation.

Chaque actionneur électromagnétique peut comporter un solénoïde et un noyau autour duquel est disposé le solénoïde, le noyau étant muni d'une face libre délimitant avec une face dudit élément mobile un entrefer. Dans un exemple avantageux, les noyaux présentent une section se réduisant en direction de l'élément mobile. Les faces délimitant l'entrefer de chacun des actionneurs électromagnétiques peuvent avantageusement être inclinées par rapport au plan défini par les première et deuxième directions de déplacement, par exemple d'un angle de 25°.

Dans un autre exemple de réalisation, la surface de stimulation est apte à se déplacer le long d'une troisième direction orthogonale aux première et deuxième directions, ledit système comportant des moyens de déplacement de ladite surface de stimulation le long de ladite troisième direction. Les moyens de déplacement le long de la troisième direction peuvent avantageusement être confondus avec ceux assurant le déplacement le long des première et deuxième directions.

Par exemple, la surface de stimulation peut comporter une rugosité dont l'amplitude moyenne est inférieure ou égale à 100 µm.

Le système de simulation selon la présente invention peut comporter un châssis et des moyens de support de la surface de stimulation, lesdits moyens de support étant déformables élastiquement le long d'au moins une direction de déplacement de sorte à permettre le déplacement de la surface de stimulation le long de ladite direction et assurer un rappel de ladite la surface de stimulation dans une position d'équilibre.

Dans un mode de réalisation, les moyens de support sont interposés entre le châssis et l'élément mobile. Par exemple, les moyens de support comportent au moins trois tiges déformables élastiquement, lesdites tiges reliant l'élément mobile et le châssis du système. Les tiges peuvent être en polyuréthane ou en élastomère, par exemple en silicone.

Dans un autre exemple de réalisation, les moyens de support comportent au moins un premier élément cylindrique creux à section rectangulaire d'axe longitudinal aligné avec la première direction. Le système selon l'invention peut comporter un deuxième élément cylindrique creux à section rectangulaire dont l'axe longitudinal est aligné avec la deuxième direction et est superposé au premier élément et est solidaire de celui-ci.

Dans un autre mode de réalisation, les moyens de support sont disposés entre l'élément mobile et la surface de stimulation, l'élément mobile étant suspendu aux moyens de support et la surface de stimulation étant supportée par les moyens de support.

Dans ce mode de réalisation, les moyens de support peuvent comporter une plaque fixée sur sa périphérie au châssis et comportant en son centre des découpes délimitant une zone centrale suspendue par des poutres, l'élément mobile et la surface de stimulation étant solidaires de ladite plaque au niveau de ladite zone suspendue.

Selon une caractéristique supplémentaire, les actionneurs électromagnétiques comportent chacun un solénoïde piloté par un amplificateur à transconductance.

La position de la surface de stimulation est avantageusement déterminée par le courant appliqué auxdits solénoïdes.

La présente invention a également pour objet un système de réalité virtuelle comportant au moins un système de simulation selon la présente invention.

Le système peut être portable et destiné à être fixé sur une zone de peau, de sorte que la zone de peau puisse se déplacer dans l'espace et que la surface de stimulation reste en contact avec ladite zone de peau.

Le système de réalité virtuelle selon l'invention peut comporter avantageusement au moins un capteur de position associé au système de simulation afin de connaître la position de la zone de peau dans l'espace par rapport à la surface à simuler.

Le système de réalité virtuelle selon l'invention peut servir à stimuler la pulpe des doigts, et comporte des systèmes pour chacun des doigts d'une main et formant un gant.

Les moyens générant des instructions de simulation sont formés par exemple par un moteur physique de simulation de réalité virtuelle.

La présente invention a également pour objet un système de commande tactile comportant au moins un système selon la présente invention, ledit système étant par exemple un écran tactile ou un pavé tactile.

La présente invention a également pour objet un procédé de commande d'un système de réalité virtuelle selon la présente invention, ledit procédé comportant :
A - l'étape de mesure de la position de la zone de peau équipée du système de simulation dans l'espace,
B - l'étape d'application à ladite zone de peau d'une amplitude de force adaptée par commande des actionneurs, ladite amplitude de force adaptée étant déterminée à partir d'un profil de rugosité préalablement établi, ledit profil de rugosité reliant à toute position de la zone de peau sur la surface à simuler une amplitude de force donnée.

Le profil de rugosité est par exemple déterminé :
- en déplaçant une zone de peau sur la surface réelle dont on souhaite réaliser le profil de rugosité,
- en mesurant l'amplitude de force appliquée à ladite zone de peau par ladite surface réelle à chaque position,
- en reliant à chaque position l'amplitude de force mesurée.

### BRÈVE DESCRIPTION DES DESSINS

La présente invention sera mieux comprise à l'aide de la description qui va suivre et des dessins en annexes sur lesquels :
- la figure 1 est une vue en perspective isométrique d'un exemple de réalisation d'un système de simulation selon un premier mode de réalisation de la présente invention,
- la figure 2 est une vue en perspective du système de la figure 1 dans lequel deux actionneurs ont été retirés,
- la figure 3 est une vue en coupe transversale du système de la figure 1 le long d'un plan contenant l'axe X et normal à l'axe Y,
- la figure 4 est une vue identique à celle de la figure 3, le système étant monté dans un boîtier et représenté en situation de simulation, avec un doigt en contact avec celui-ci,
- la figure 5 représente le profil de rugosité reproductible dans le domaine spatial pour la commande du système selon la présente invention,
- les figures 6A et 6B sont des représentations graphiques des efforts à simuler dans le cas de la préhension d'un objet et le cas du glissement du doigt sur une surface respectivement,
- la figure 7 est un exemple d'un schéma de la commande électronique d'un système de simulation selon la présente invention,
- la figure 8 est une vue en perspective d'un autre exemple d'un système selon le premier mode de réalisation selon la présente invention, dans lequel deux actionneurs ont été retirés,
- la figure 9 est une vue en coupe longitudinale d'un exemple d'un système selon un deuxième mode de réalisation selon la présente invention,
- la figure 10 est une vue en coupe en perspective du système de la figure 9 dans lequel la plateforme de stimulation et un actionneur ont été retirés,
- la figure 11 est une vue de dessus d'une pièce du système de la figure 9,
- la figure 12 est une vue en perspective éclatée d'un autre exemple du système selon le deuxième mode de réalisation selon la présente invention,
- la figure 13 est une vue de dessus de l'intérieur du système de la figure 12.

### EXPOSÉ DÉTAILLÉ DE MODES DE RÉALISATION DE L'INVENTION

Dans la description qui va suivre, le système de simulation selon l'invention est décrit en particulier pour stimuler la pulpe d'un doigt. Cependant, il est bien entendu que la présente invention peut s'appliquer à toute zone de la peau de l'utilisateur.

Dans les différents modes et exemples de réalisation, les mêmes références seront utilisées pour désigner les éléments ayant la même fonction et ayant sensiblement la même forme.

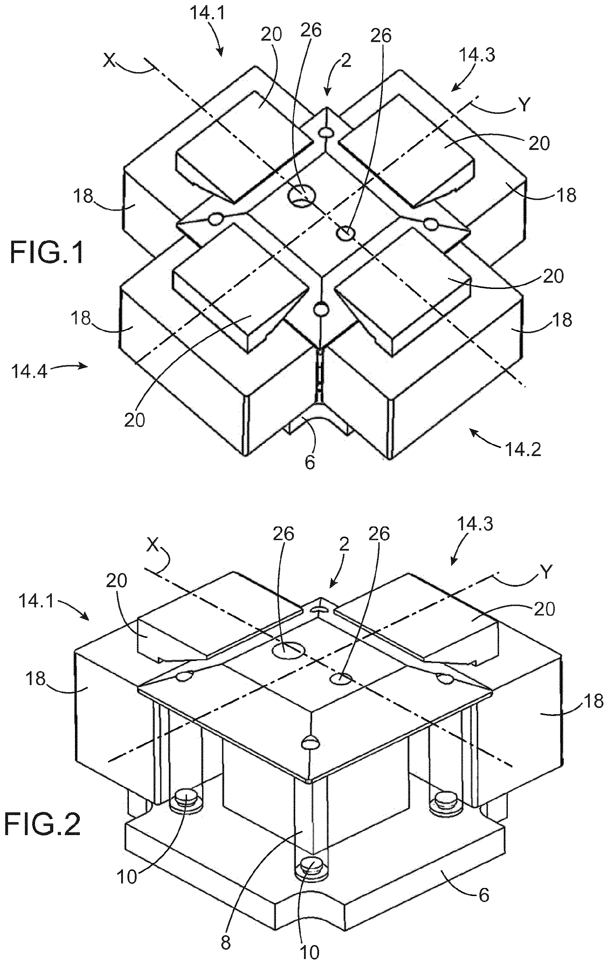

Sur les figures 1 à 4, on peut voir un exemple de réalisation d'un système de simulation de rugosité par stimulation tactile selon un premier mode de réalisation de la présente invention.

Le système de simulation comporte un élément sensiblement plan 2 mobile par rapport à un châssis 6 et des moyens pour déplacer l'élément mobile 2 le long d'au moins deux axes X, Y orthogonaux et contenu dans le plan de l'élément mobile 2. Le système est monté dans un boîtier 7 muni d'une ouverture supérieure. Une plateforme 4 disposée au niveau de cette ouverture est solidaire en mouvement de l'élément mobile 2 au moins selon les directions X et Y, la plateforme 4 est munie d'une surface 4.1 destinée à entrer en contact avec une zone de peau à stimuler. La surface 4.1 est donc mobile dans un plan parallèle au plan XY. A titre d'exemple, la surface pour un doigt peut par exemple être de 10 mm × 10 mm. Elle peut être plus grande dans les applications type pavé tactile ("Touch pad") ou écrans tactiles. Dans l'exemple représenté le châssis 6 comporte une base plane, l'élément mobile 2 est apte à se déplacer parallèlement au châssis 6.

La surface 4.1 de la plateforme 4 peut être lisse ou légèrement rugueuse. Dans le cas où la surface 4.1 est rugueuse, la rugosité doit être telle que l'utilisateur ne la sente pas lorsqu'il n'y a pas de déplacement relatif entre la peau et la surface 4.1. Par exemple, l'amplitude moyenne de la rugosité peut être de l'ordre de 100 µm, ce qui correspond à un Ra 63.

Dans l'exemple représenté et de manière avantageuse, l'élément mobile 2 est supporté par des moyens de support déformables élastiquement le long des axes X et Y sur la course de l'élément mobile.

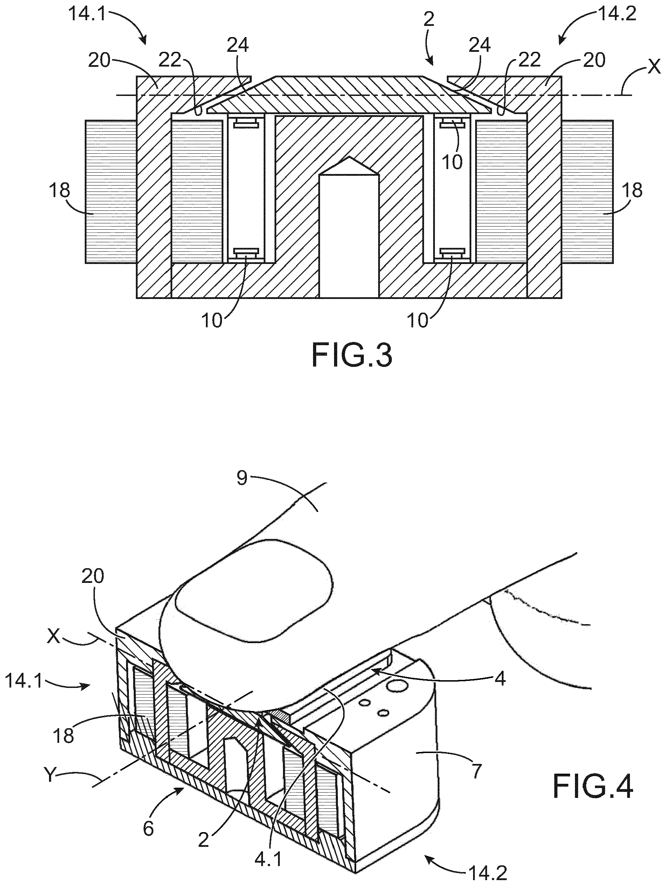

Les moyens de support sont formés dans cet exemple de réalisation par plusieurs tiges 8 déformables élastiquement, s'étendant entre le châssis et l'élément mobile, plus particulièrement visibles sur les figures 2 et 3. Dans cet exemple, les tiges 8 sont par exemple au nombre de quatre et l'élément mobile 2 repose sur une extrémité de celles-ci opposée à celle fixée dans le châssis. Les tiges 8 forment également des moyens de rappel en position centrale de l'élément mobile 2.

Dans l'exemple particulier représenté, les tiges 8 sont pleines. Le châssis 6 comporte en saillie de la surface tournée vers l'élément 2 des pions 10 et l'élément 2 comporte également sur sa surface faisant face au châssis des pions 12 en saillie. Chaque pion 10 du châssis 6 est aligné avec un pion 12 de l'élément 2 selon un axe perpendiculaire au châssis et à l'élément. Lors du montage des tiges 8, les pions 10 du châssis 6 et ceux 12 de l'élément mobile 2 sont solidaires des extrémités des tiges. Par exemple, le matériau de tiges est surmoulé sur les pions 10, 12, assurant une certaine rigidité à l'assemblage. Les pions assurent un guidage de la plateforme 2 en translation suivant les deux axes X et Y et évitent que la plateforme 2 entre en contact avec le châssis 6. Il est bien entendu que tout autre type d'assemblage entre dans le cadre de la présente invention.

Les tiges sont sollicitées en flexion.

Les tiges sont par exemple en polyuréthane ce qui leur confère une très bonne élasticité en flexion. Les tiges 8 peuvent en variante être réalisées en élastomère, par exemple en silicone.

En variante, les tiges pourraient être remplacées par des ressorts hélicoïdaux à spires jointives.

Les tiges, et plus généralement les moyens de support déformable élastiquement, du fait de leur flexibilité, assurent un effet de rappel élastique de la plateforme dans sa position d'équilibre et permettent de contrôler le système en boucle ouverte, puisqu'il n'est pas nécessaire de contrôler la position de la plateforme.

De manière alternative, le rappel élastique pourrait être remplacé ou complété par un système de guidage de type classique et des moyens pour connaître la position de la plateforme.

Le système comporte en outre des moyens pour mettre en mouvement l'élément mobile 2 le long des axes X et Y. Les moyens pour mettre en mouvement l'élément mobile 2 sont formés par des actionneurs électromagnétiques 14.1, 14.2, 14.3, 14.4. Dans l'exemple représenté, le système comporte quatre actionneurs électromagnétiques. Une paire d'actionneurs 14.1, 14.2 est disposée sur l'axe X et une paire d'actionneurs 14.3, 14.4 est disposée sur l'axe Y.

Par exemple, les actionneurs sont aptes à fournir une fréquence stimulation élevée, par exemple comprise entre 0 et 1200 Hz.

Les actionneurs 14,1, 14.2 sont disposés de part et d'autre de l'élément mobile 4 de sorte que chacun agisse sur l'élément 2 dans une direction opposée le long de l'axe X.

Les actionneurs 14,3, 14.4 sont disposés de part et d'autre de l'élément mobile 4 de sorte que chacun agisse sur l'élément 2 dans une direction opposée le long de l'axe Y.

Comme on peut le voir en particulier sur la figure 3, chaque actionneur comporte un solénoïde 18 et un circuit magnétique. Le circuit magnétique est formé en partie par le châssis, l'élément mobile 2, et un noyau 20 autour duquel est disposé le solénoïde 18. Dans l'exemple représenté, l'axe du solénoïde 18 est perpendiculaire au plan du châssis 6, mais cette configuration n'est en aucun cas limitative. Le châssis formant une partie du circuit magnétique est donc réalisé en matériau magnétique.

Le châssis comporte en son centre une protubérance située entre les quatre tiges 8 et sous l'élément 2, refermant le circuit magnétique.

Chaque noyau 20 comporte une surface 22 en regard d'une surface 24 de l'élément mobile 2 sur laquelle elle exerce une force d'attraction afin de déplacer l'élément mobile 2 vers le noyau 18.

Dans l'exemple représenté et de manière particulièrement avantageuse, les surfaces 22 et 24 des noyaux et de l'élément mobile 2 sont en biseau, l'aire de ces surfaces est ainsi augmentée, ce qui permet une meilleure répartition de la force en fonction de la position. L'angle d'inclinaison des surface 22, 24 par rapport au plan défini par les axes X et Y est par exemple de l'ordre de 25°.

Dans l'exemple représenté, l'élément mobile 2 a la forme d'une pyramide à apex tronqué. L'apex tronqué forme un appui plan pour la plateforme 4. Chacun des pans inclinés forme une surface d'interaction 24. Quant aux noyaux 20, les surfaces 22 sont réalisées de sorte à être parallèles aux surfaces 24. Chaque paire de surfaces 22, 24 définit un entrefer dans lequel seront générées les forces électromagnétiques.

Dans l'exemple représenté, l'apex est percé de deux trous 26 destinés à recevoir des picots en saillie de la surface de la plateforme 4 à l'opposé de la surface 4.1. La coopération des trous et des picots assure la solidarisation de la plateforme 4 et de l'élément 2 selon les axes X et Y. Il est bien entendu que les dispositions des trous et des picots pourraient être inversées. Par exemple, les picots sont insérés à force dans la plateforme 2, assurant ainsi la solidarisation.

En variante, la plateforme 4 peut être fixée sur l'élément mobile 2 par collage, par vissage et/ou par des clips.

Cet exemple de réalisation n'est pas limitatif.

En outre, des actionneurs dans lesquels les surfaces d'interaction sont contenues dans des plans perpendiculaires au plan défini par les axes X et Y ne sortent pas du cadre de la présente invention.

En activant alternativement les actionneurs 14.1 à 14.4, il est possible de déplacer l'élément 2 vers toute position dans le plan XY, et ainsi de déplacer la surface 4.1.

Dans un autre exemple de réalisation, le système comporte trois actionneurs disposés sur un cercle à 120° les uns des autres. Le déplacement dans l'une des directions X et Y est alors obtenu par une somme vectorielle des forces appliquées par chacun des actionneurs. Dans cet exemple, l'élément mobile 2 a par exemple la forme d'un disque au bord biseauté.

Le dispositif peut être alimenté suivant des techniques différentes.

Dans un exemple de réalisation, les solénoïdes 18 sont pilotés en tension, en appliquant une tension contrôlée et en laissant le courant évoluer, avec un amplificateur traditionnel. La bande passante du dispositif est alors celle du circuit RL (formé par la résistance et l'inductance du solénoïde).

Dans un autre exemple de réalisation, les solénoïdes sont pilotés en courant ce qui permet d'augmenter la bande passante. Ainsi la tension aux bornes du solénoïde sera ajustée pour que le courant traversant soit égal à la consigne. La bande passante de ce système sera limitée par la tension maximale que l'amplificateur transconductance peut délivrer.

La mise en oeuvre d'actionneurs électromagnétiques présente en outre l'avantage de ne pas nécessiter de capteurs pour mesurer le déplacement de l'élément mobile 2, puisque celui-ci peut être déduit du courant appliqué aux solénoïdes. En effet, l'inductance du solénoïde dépend de la position de la plateforme 2, il est alors possible de mesurer cette inductance pour en déduire la position de l'élément mobile 2 et de la plateforme 4.

La surface 4.1 est déplacée de sorte à générer des fréquences de stimulation élevées, avantageusement ayant une bande passante de 0 à 1200 Hz, permettant de retranscrire les interactions dynamiques du toucher.

Le déplacement de la surface 4.1 dans un plan parallèle au plan XY permet alors de simuler une rugosité de surface ou une texture de surface.

De manière avantageuse, le système selon l'invention peut également permettre de réaliser des simulations par indentation par déplacement de la surface 4 selon un axe Z orthogonal aux axes X et Y en direction de la zone de peau. De manière très avantageuse, ce déplacement peut être obtenu directement avec le système des figures 1 à 4 en alimentant simultanément les quatre solénoïdes 18.

On peut envisager de mettre en oeuvre un ou plusieurs actionneur(s) dédiés au déplacement le long de l'axe Z. Il peut s'agir d'un actionneur piézoélectrique, des moyens d'amplification de la course sont alors avantageusement prévus entre l'actionneur et l'élément 2. On peut également utiliser un actionneur utilisant les forces de Laplace, ce type d'actionneur présente l'avantage d'offrir une force constante sur toute la course.

Un capteur de position le long de l'axe X est prévu, dans le cas où les moyens de déplacement selon l'axe Z ne sont pas des actionneurs électromagnétiques.

Dans le cas d'un système embarqué destiné à la réalité virtuelle, celui-ci peut comporter des capteurs de position permettant de connaître la position du doigt dans l'espace et la vitesse de déplacement du doigt. En effet, la sensation ressentie par l'utilisateur dépend de l'emplacement sur la surface virtuelle et de la vitesse de déplacement par rapport à la surface.

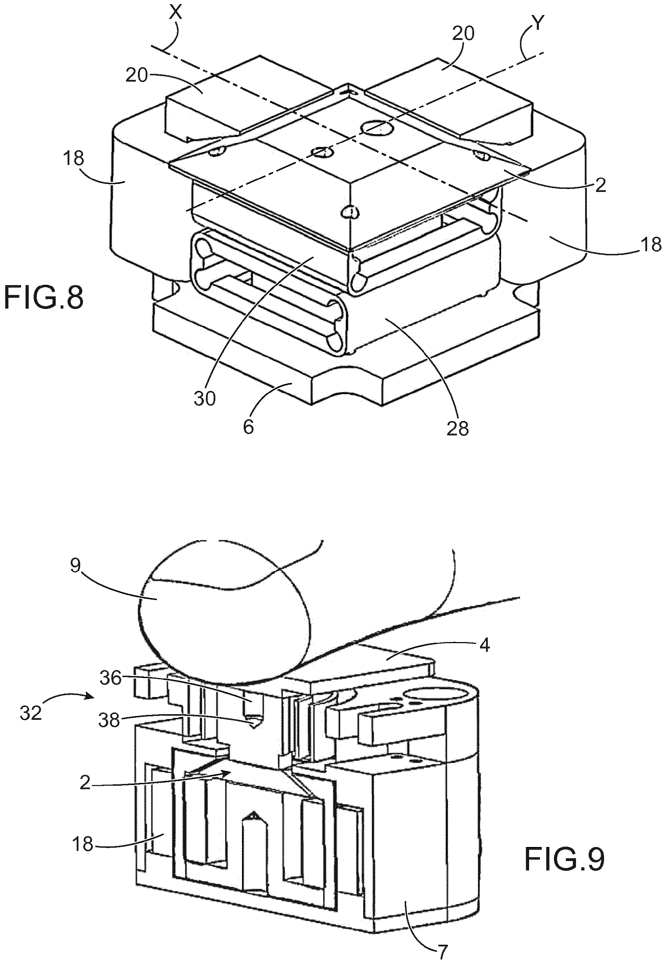

Sur la figure 8, on peut voir un autre exemple de réalisation du système selon le premier mode de réalisation selon la présente invention.

Le système de la figure 8 est très proche de celui des figures 1 à 4, il diffère de celui-ci par le fait que les tiges 8 ont été remplacées par deux éléments 28, 30 formant des parallélogrammes déformables.

Le support flexible de la partie mobile 2 permettant deux degrés de liberté en translation comporte alors un premier élément cylindrique creux 28 d'axe longitudinal aligné avec l'axe Y et un deuxième élément cylindrique creux 30 d'axe longitudinal aligné avec l'axe X. Les premier et deuxième éléments 28, 30 sont déformables élastiquement selon les axes X et Y respectivement et forment des parallélogrammes déformables. Les deux éléments 28, 30 sont superposés et s'interposent entre le châssis et l'élément mobile 2. Le premier élément 28 est solidarisé au châssis par exemple par des vis ou par des picots insérés à force, et le deuxième élément est solidarisé à la partie mobile 2.

Les éléments 28, 30 sont par exemple réalisés en matériau plastique comme le polyoxyméthylène, comme le Delrin® ou en métal.

Sur les figures 9 à 11, on peut voir un exemple de réalisation du système selon un deuxième mode de réalisation de la présente invention.

Le système des figures 9 à 11 diffère des systèmes selon le premier mode de réalisation en ce que les moyens de support flexible permettant les translations dans les deux directions X et Y et assurant un rappel en position d'équilibre sont interposés entre la plateforme 4 et la surface mobile 2.

Dans cet exemple de réalisation, le système comporte un support formé par une plaque 32 fixée au niveau de ses extrémités latérales au boîtier 7, par exemple par des vis aux quatre coins.

La plaque 32 est découpée de telle sorte que les découpes 33 offrent les deux degrés de liberté en translation à la plateforme 4 et assurent le rappel en position d'équilibre.

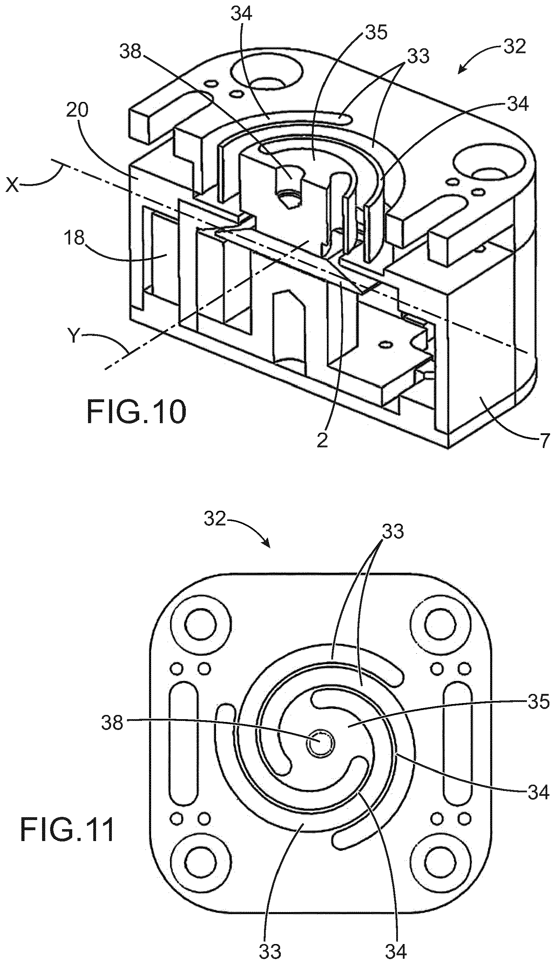

Sur la figure 11, on peut voir un exemple de découpes 33 assurant ces fonctions. Les découpes 33 sont des portions de spirales, trois dans l'exemple représenté, qui sont enroulées les unes dans les autres. Les trois portions de spirales 33 délimitent des poutres de forme incurvée 34 aux extrémités desquelles une plaquette 35 est suspendue.

La plateforme 4 est solidaire de la plaquette suspendue 35, par exemple la plateforme comporte un picot 36 en saillie de sa face inférieure, qui est monté à force dans un alésage 38 prévu dans la face supérieure de la plaquette suspendue 35, au centre de celle-ci.

La plaquette suspendue est solidaire en mouvement de la partie mobile 2, par exemple par insertion à force, par collage ou vissage.

La partie mobile 2 et la plaquette suspendue 35 étant fixées l'une à l'autre, la partie mobile 2 est de fait également suspendue par les poutres 34 au dessus de la protubérance centrale du châssis.

La plaque est par exemple réalisée en matériau plastique comme le polyoxyméthylène tel que le Delrin®, ou en métal.

L'utilisation de matériau plastique présente l'avantage, puisque celui-ci est généralement relativement déformable, de permettre une course plus importante. Quant à l'utilisation du métal, celui-ci étant plus rigide, il a un effet d'amortissement moindre, et donc les pertes énergétiques sont réduites.

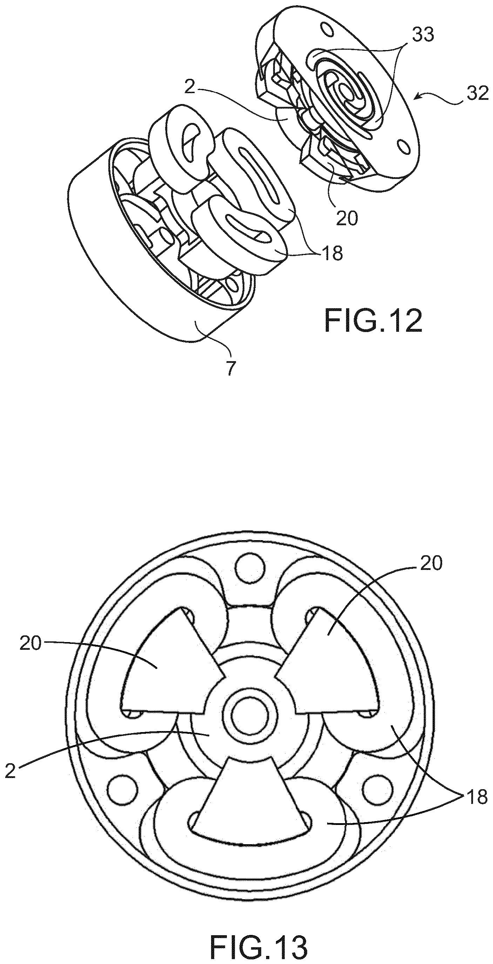

Sur les figures 12 et 13, on peut voir un autre exemple de réalisation du système selon le deuxième mode de réalisation de la présente invention, dans lequel les actionneurs sont au nombre de trois répartis à 120° les uns des autres. Les solénoïdes ont avantageusement une forme en haricot afin d'améliorer l'intégration dans un boîtier cylindrique de révolution

De manière avantageuse, les noyaux 20 ont, vus de dessus, une forme de trapèze isocèle dont la petite base forme l'entrefer avec la partie mobile. Les noyaux présentent alors une section transversale qui se réduit en direction de la partie mobile, ce qui provoque un effet de concentration de champ.

En variante, on peut prévoir un système à un degré de liberté en traction latéral comportant deux actionneurs.

Il est bien entendu que les moyens de support pourraient être réalisés par des liaisons mécaniques, avec des éléments articulés les uns par rapport aux autres. Par exemple il pourrait s'agir de parallélogrammes déformables formés par des tiges articulées les unes par rapport aux autres par des liaisons pivots. Des moyens de détection de la position de la plateforme seraient alors de préférence prévus. Les moyens de support seraient alors déformables mécaniquement, i.e. au moyen d'articulations.

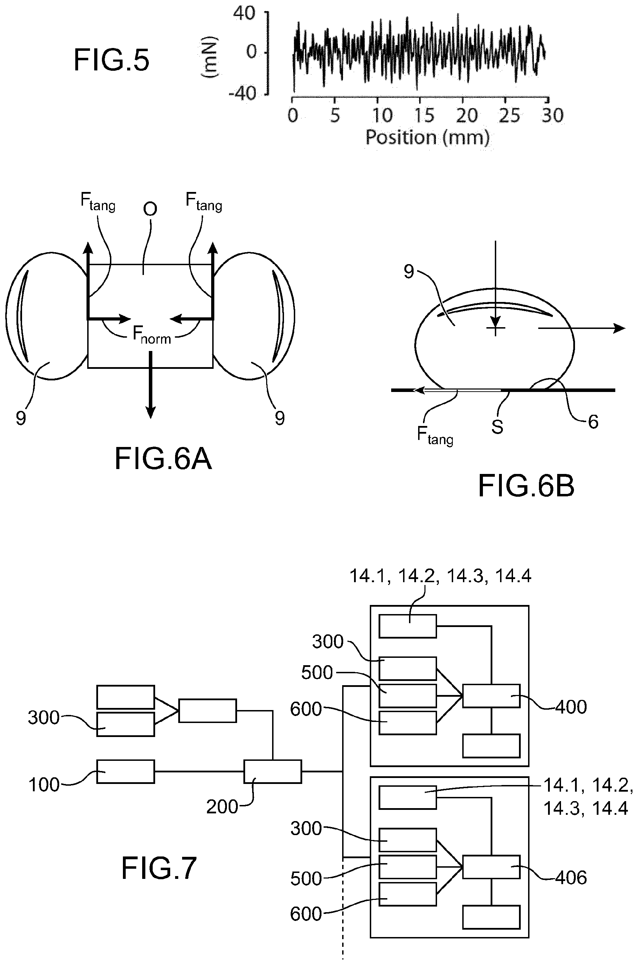

Sur la figure 7, on peut voir un exemple de schéma de la commande électronique du système appliqué à la réalité virtuelle monté sur au moins deux doigts.

Les trois axes de stimulation sont pilotés d'après des consignes fournies par le moteur physique de simulation de réalité virtuelle 100. Un moteur de réalité virtuelle est une simulation temps réel d'un environnement mécanique virtuel. Il prend comme données d'entrée les informations sur la position des doigts et calcule les forces d'interactions en fonction du contact avec un objet virtuel. Le moteur virtuel utilise des profils de rugosité préalablement établi qui seront décrit par la suite.

Le système de simulation comporte un coordinateur 200, par exemple sous la forme d'une carte électronique, coordonnant les données reçues du moteur physique 100, la charge d'une batterie 300 d'alimentation du système et les consignes de chaque dispositif de stimulation. Avantageusement les données sont transmises par liaison sans fil. La charge de la batterie est surveillée pour éviter une trop forte décharge de celle-ci.

Le système comporte un microcontrôleur 400 destiné à contrôler les moteurs suivant les ordres reçus par le coordinateur 200, et régule les actionneurs électromagnétiques 14.1, 14.2, 14.3, 14.3 par rapport à la consigne et aux informations fournies

En outre, le microcontrôleur 400 peut interpoler les mouvements des doigts à partir des informations fournies par l'accéléromètre 500.

De manière avantageuse, un capteur de force 600, par exemple capacitif, peut être prévu pour contrôler l'effort appliqué par les moteurs sur les doigts. Ce capteur est disposé entre l'élément mobile et la peau et mesure les interactions normales et tangentielles. Il est bien entendu que le système selon la présente invention peut être adapté pour stimuler toute zone de peau, et non uniquement les doigts. Par ailleurs, on peut envisager d'avoir une surface agissant sur plusieurs doigts simultanément.

Nous allons maintenant expliquer le fonctionnement du système selon la présente invention à partir du système représenté sur les figures 1 à 4 dans le cadre d'un système de réalité virtuelle, le système étant fixé à l'extrémité d'un doigt.

L'utilisateur fixe la surface 4 sur la pulpe de son doigt 9, comme représenté sur la figure 4.

Lorsque l'on souhaite générer une stimulation de rugosité, les actionneurs sont actionnés suivant un schéma correspondant à un profil de rugosité d'un objet donné.

Par exemple, pour réaliser le profil de rugosité d'une surface dont on veut simuler la rugosité, on mesure l'amplitude de force tangentielle appliquée au doigt pour chaque position du doigt sur la surface à simuler. Cette prise de mesure à lieu lors d'un déplacement du doigt sur la surface. La prise en compte de la vitesse de déplacement du doigt est obtenue par les mesures de position.

Lors de la simulation, on détecte la position du doigt et du système, qui est équipé de capteurs de position par rapport à la surface virtuelle. On relie alors l'amplitude de force à appliquer en fonction de la position du doigt grâce au profil de rugosité préalablement établi, et on actionne les actionneurs de sorte qu'ils mettent en mouvement l'élément mobile 2 et la plateforme 4 sur la base du profil de rugosité préalablement établi et appliquent l'amplitude de force souhaitée.

La fréquence de stimulation des actionneurs étant élevée, ils permettent d'effectuer un rafraîchissement de stimulation assurant une simulation réaliste.

Sur la figure 5, on peut voir un exemple de profil de rugosité reproductible dans le domaine spatial par le système selon la présente invention. Sur la figure 5, on peut voir l'amplitude de la force tangentielle en mN en fonction de la position en mm. Ce profil de rugosité correspond à un déplacement selon une dimension. Dans le cas d'un déplacement sur une surface, on réalise le profil le long de deux directions. Dans le cas d'un doigt, la variation du frottement du doigt (et donc de la force tangentielle) est l'indice de perception de la rugosité.

L'élément mobile 2 est alors attiré successivement vers les noyaux 20, la surface 4.1 se déplace alors par rapport à la surface de la pulpe du doigt stimulant celle-ci et générant une simulation de la rugosité de la surface de l'objet donné.

Dans le cas où l'on souhaite simuler la préhension d'un objet O par au moins deux doigts comme cela est schématisé sur la figure 6A, chaque doigt est équipé d'un système selon l'invention. Dans ce cas, les systèmes comportent des moyens pour fixer les systèmes aux doigts, permettant ainsi à l'utilisateur de bouger les doigts tout en conservant le contact avec les surfaces 4.1. Pour simuler une préhension, on génère à la fois des forces normales Fₙₒᵣₘₐₗ à la pulpe des doigts simulant l'effort de serrage, et des forces tangentielles F_{tang} selon une direction simulant le poids de l'objet. Sur la figure 6B, on peut voir une représentation schématique de la force en cas du glissement du doigt 9 sur une surface respectivement, le glissement est simulé par la variation au cours du temps des forces tangentielles F_{tang} suivant la direction de déplacement du doigt à la pulpe du doigt.

Dans le cas particulier de la stimulation des doigts, on peut envisager de réaliser un gant portant les systèmes pour chacun des doigts.

Du fait de la fréquence d'actionnement élevée des actionneurs, le système selon la présente invention offre une grande vitesse de stimulation, ce qui permet de couvrir toute la bande passante du tactile, offrant alors une simulation réaliste.

Grâce aux stimulations par cisaillement dans deux directions et par indentation, il est possible de simuler une réaction dynamique avec un environnement extérieur.

En outre, le système assure une interaction réaliste sans avoir recours à des métaphores tactiles.

En équipant au moins deux doigts d'une main avec un système selon la présente invention, il est possible de simuler très facilement la préhension d'un objet virtuel. En effet, grâce à la stimulation par indentation, l'utilisateur à la sensation de serrer un objet aux bouts de ses doigts et grâce à la stimulation par cisaillement, l'utilisateur a l'impression de ressentir le poids de l'objet.

Le système décrit est adapté à la stimulation de la pulpe d'un doigt, mais on peut envisager de réaliser une pluralité de systèmes formant un gant permettant de stimuler la pulpe de plusieurs doigts, par exemple pour simuler la préhension d'un objet avec tous les doigts d'une main, ou avec les deux mains.

Le système selon la présente invention est particulièrement adapté aux systèmes de réalité virtuelle. Le système stimule le doigt ou une zone de peau quelconque en corrélation avec les informations fournies par le système de réalité virtuelle avec une haute fidélité.

A titre d'exemple, le système selon l'invention peut être utilisé dans le domaine des jeux vidéo, des simulations interactives, sur une souris d'ordinateur, sur un pavé tactile/écran tactile ou sur un volant par exemple. Dans le cas d'un écran tactile, l'écran forme la plateforme 4.

## Revendications

1. Système de simulation d'un contact avec une surface par stimulation tactile comportant une surface de stimulation (4.1) destinée à entrer en contact avec une zone de peau d'un utilisateur, ledit système comportant des moyens pour déplacer la surface de stimulation selon au moins une première direction sensiblement tangente à la zone de peau, lesdits moyens de déplacement étant commandés en fonction de la simulation à générer, dans lequel lesdits moyens de déplacement sont des actionneurs électromagnétiques (14.1, 14.2, 14.3, 14.4), dans lequel les actionneurs électromagnétiques sont disposés autour d'un élément mobile (2) supportant la surface de stimulation (4.1) et dans lequel chaque actionneur électromagnétique (14.1, 14.2, 14.3, 14.4) comporte un solénoïde (18) et un noyau (20) autour duquel est disposé le solénoïde (18), le noyau étant muni d'une face libre (22) délimitant avec une face (24) dudit élément mobile (2) un entrefer.

2. Système de simulation selon la revendication 1, dans lequel les moyens pour déplacer la surface de stimulation sont également aptes à déplacer la surface de stimulation selon une deuxième direction (X, Y) orthogonale à la première direction et sensiblement tangente à la zone de peau.

3. Système de simulation selon la revendication 1 ou 2, comportant trois actionneurs électromagnétiques disposés sur un cercle, répartis autour d'un élément mobile (2) supportant la surface de stimulation (4.1), à 120° les uns des autres.

4. Système de simulation selon la revendication 1 ou 2, comportant quatre actionneurs électromagnétiques (14.1, 14.2, 14.3, 14.4), deux actionneurs (14.1, 14.2) étant disposés le long de la première direction de déplacement (X) de part et d'autre d'un élément mobile (2) supportant la surface de stimulation (4.1) et deux actionneurs (14.3, 14.3) étant disposés le long de la deuxième direction de déplacement (Y) de part et d'autre de l'élément mobile (2) supportant la surface de stimulation (4.1).

5. Système de simulation selon l'une des revendications 1 à 4, dans lequel les noyaux présentent une section se réduisant en direction de l'élément mobile (2).

6. Système de simulation selon l'une des revendications 1 à 5, dans lequel les faces (22, 24) délimitant l'entrefer de chacun des actionneurs électromagnétiques sont inclinées par rapport au plan défini par les première (X) et deuxième (Y) direction de déplacement, par exemple d'un angle de 25°.

7. Système de simulation selon l'une des revendications 1 à 6, dans lequel la surface de stimulation (4.1) est apte à se déplacer le long d'une troisième direction (Z) orthogonale aux première (X) et deuxième (Y) directions, ledit système comportant des moyens de déplacement de ladite surface de stimulation le long de ladite troisième direction (Z), les moyens de déplacement le long de la troisième direction (Z) étant avantageusement sont confondus avec ceux assurant le déplacement le long des première (X) et deuxième (Y) directions.

8. Système de simulation selon l'une des revendications 1 à 7, comportant un châssis (6) et des moyens de support de la surface de stimulation, lesdits moyens de support étant déformables élastiquement le long d'au moins une direction de déplacement de sorte à permettre le déplacement de la surface de stimulation (4.1) le long de ladite direction et assurer un rappel de ladite la surface de stimulation dans une position d'équilibre.

9. Système de simulation selon la revendication 8 en combinaison avec la revendication 3 ou 4, dans lequel les moyens de support sont interposés entre le châssis et l'élément mobile (2).

10. Système de simulation selon la revendication 9, dans lequel les moyens de support comportent au moins trois tiges (8) déformables élastiquement, lesdites tiges (8) reliant l'élément mobile (2) et le châssis du système, les tiges (8) étant avantageusement en polyuréthane ou en élastomère, par exemple en silicone.

11. Système de simulation selon la revendication 8 ou 9, dans lequel les moyens de support comportent au moins un premier élément (28) cylindrique creux à section rectangulaire d'axe longitudinal aligné avec la première direction (X) et un deuxième élément (30) cylindrique creux à section rectangulaire dont l'axe longitudinal est aligné avec la deuxième direction (Y) et est superposé au premier élément et est solidaire de celui-ci.

12. Système de simulation selon la revendication 8 en combinaison avec la revendication 3 ou 4, dans lequel les moyens de support sont disposés entre l'élément mobile (2) et la surface de stimulation, l'élément mobile (2) étant suspendu aux moyens de support et la surface de stimulation étant supportée par les moyens de support.

13. Système de simulation selon la revendication 12, dans lequel les moyens de support comportent une plaque (32) fixée sur sa périphérie au châssis (6) et comportant en son centre des découpes (33) délimitant une zone centrale (35)suspendue par des poutres (34), l'élément mobile (2) et la surface de stimulation (4.1) étant solidaires de ladite plaque (32) au niveau de ladite zone suspendue (35).

14. Système de simulation selon l'une des revendications 1 à 13, dans lequel les actionneurs électromagnétiques comportent chacun un solénoïde, et la position de la surface de stimulation (4.1) est déterminée par le courant appliqué auxdits solénoïdes.

15. Système de réalité virtuelle comportant au moins un système de simulation selon l'une quelconque des revendications 1 à 14, ledit système étant portable et étant destiné à être fixé sur une zone de peau, de sorte que la zone de peau puisse se déplacer dans l'espace et que la surface de stimulation (4.1) reste en contact avec ladite zone de peau, le système de réalité virtuelle étant destiné à stimuler la pulpe des doigts, comportant des systèmes pour chacun des doigts d'une main et formant un gant.

16. Système de commande tactile comportant au moins un système de simulation selon l'une des revendications 1 à 15, ledit système étant par exemple un écran tactile ou un pavé tactile.

17. Procédé de commande d'un système de réalité virtuelle selon la revendication 15 comportant au moins un capteur de position associé au système de simulation afin de connaître la position de la zone de peau dans l'espace par rapport à la surface à simuler, ledit procédé comportant :
A- l'étape de mesure de la position de la zone de peau équipée du système de simulation dans l'espace,
B- l'étape d'application à ladite zone de peau d'une amplitude de force adaptée par commande des actionneurs, ladite amplitude de force adaptée étant déterminée à partir d'un profil de rugosité préalablement établi, ledit profil de rugosité reliant à toute position de la zone de peau sur la surface à simuler une amplitude de force donnée,
le profil de rugosité étant déterminé :
- en déplaçant une zone de peau sur la surface réelle dont on souhaite réaliser le profil de rugosité,
- en mesurant l'amplitude de force appliquée à ladite zone de peau par ladite surface réelle à chaque position, et
- en reliant à chaque position l'amplitude de force mesurée.

## Patentansprüche

1. System zur Simulation eines Kontakts mit einer Oberfläche durch taktile Stimulation, umfassend eine Stimulations-Oberfläche (4.1), welche dazu bestimmt ist, in Kontakt mit einem Hautbereich eines Benutzers zu kommen, wobei das System Mittel umfasst, um die Stimulations-Oberfläche entlang wenigstens einer ersten Richtung zu verlagern, welche im Wesentlichen tangential zu dem Hautbereich ist, wobei die Verlagerungs-Mittel abhängig von der zu erzeugenden Simulation gesteuert werden, wobei die Verlagerungs-Mittel elektromagnetische Aktuatoren (14.1, 14.2, 14.3, 14.4) sind, wobei die elektromagnetischen Aktuatoren um ein bewegbares Element (2) herum angeordnet sind, welches die Stimulations-Oberfläche (4.1) trägt, und wobei jeder elektromagnetische Aktuator (14.1, 14.2, 14.3, 14.4) einen Solenoiden (18) und einen Kern (20) umfasst, um welchen herum der Solenoid (18) angeordnet ist, wobei der Kern mit einer freien Fläche (22) vorgesehen ist, welche zusammen mit einer Fläche (24) des bewegbaren Elements (2) einen Luftspalt begrenzt.

2. System zur Simulation nach Anspruch 1, wobei die Mittel zum Verlagern der Stimulations-Oberfläche ferner dazu eingerichtet sind, die Stimulations-Oberfläche entlang einer zweiten Richtung (X, Y) orthogonal zu der ersten Richtung und im Wesentlichen tangential zu dem Hautbereich zu verlagern.

3. System zur Simulation nach Anspruch 1 oder 2, umfassend drei elektromagnetische Aktuatoren, welche auf einem Kreis angeordnet sind, um das bewegbare Element (2), welches die Stimulations-Oberfläche (4.1) trägt, herum um 120° voneinander beabstandet.

4. System zur Simulation nach Anspruch 1 oder 2, umfassend vier elektromagnetische Aktuatoren (14.1, 14.2, 14.3, 14.4), wobei zwei Aktuatoren (14.1, 14.2) entlang der ersten Verlagerungsrichtung (X) beiderseits eines bewegbaren Elements (2) angeordnet sind, welches die Stimulations-Oberfläche (4.1) trägt, und zwei Aktuatoren (14.3, 14.3) entlang der zweiten Verlagerungsrichtung (Y) beiderseits des bewegbaren Elements (2) angeordnet sind, welches die Stimulations-Oberfläche (4.1) trägt.

5. System zur Simulation nach einem der Ansprüche 1 bis 4, wobei die Kerne einen Querschnitt aufweisen, welcher sich in Richtung des bewegbaren Elements (2) verkleinert.

6. System zur Simulation nach einem der Ansprüche 1 bis 5, wobei die den Luftspalt begrenzenden Flächen (22, 24) jedes der elektromagnetischen Aktuatoren bezüglich der von der ersten (X) und zweiten (Y) Verlagerungsrichtung definierten Ebene geneigt sind, beispielsweise um einen Winkel von 25°.

7. System zur Simulation nach einem der Ansprüche 1 bis 6, wobei die Stimulations-Oberfläche (4.1) dazu eingerichtet ist, sich entlang einer dritten Richtung (Z) zu verlagern, welche orthogonal zu der ersten (X) und zweiten (Y) Richtung ist, wobei das System Mittel zum Verlagern der Stimulations-Oberfläche entlang der dritten Richtung (Z) umfasst, wobei die Mittel zum Verlagern entlang der dritten Richtung (Z) vorzugsweise gleich denjenigen sind, die die Verlagerung entlang der ersten (X) und zweiten (Y) Richtung machen.

8. System zur Simulation nach einem der Ansprüche 1 bis 7, umfassend ein Gestell (6) und Mittel zum Tragen der Stimulations-Oberfläche, wobei die Tragemittel entlang wenigstens einer Verlagerungsrichtung elastisch verformbar sind, um so die Verlagerung der Stimulations-Oberfläche (4.1) entlang der Richtung zu erlauben und eine Rückstellung der Stimulations-Oberfläche in eine Gleichgewichtsposition machen.

9. System zur Simulation nach Anspruch 8 in Kombination mit Anspruch 3 oder 4, wobei die Tragemittel zwischen dem Gestell und dem bewegbare Element (2) eingefügt sind.

10. System zur Simulation nach Anspruch 9, wobei die Tragemittel wenigstens drei elastisch verformbare Stangen (8) umfasst, wobei die Stangen (8) das bewegbare Element (2) und das Gestell des Systems verbinden, wobei die Stangen (8) vorzugsweise aus Polyurethan oder aus Elastomer bestehen, beispielsweise aus Silikon.

11. System zur Simulation nach Anspruch 8 oder 9, wobei die Tragemittel wenigstens ein erstes hohles zylindrisches Element (28) mit einem rechteckigen Querschnitt mit einer longitudinalen Achse, welche mit der ersten Richtung (X) ausgerichtet ist, und ein zweites hohles zylindrisches Element (30) mit rechteckigem Querschnitt umfassen, dessen longitudinale Achse mit der zweiten Richtung (Y) ausgerichtet ist und dem ersten Element überlagert ist und an diesem befestigt ist.

12. System zur Simulation nach Anspruch 8 in Kombination mit Anspruch 3 oder 4, wobei die Tragemittel zwischen dem bewegbaren Element (2) und der Stimulations-Oberfläche angeordnet sind, wobei das bewegbare Element (2) an den Tragemitteln aufgehängt ist und die Stimulations-Oberfläche von den Tragemitteln getragen ist.

13. System zur Simulation nach Anspruch 12, wobei die Tragemittel eine Platte (32) umfassen, welche an ihrem Umfang an dem Gestell (6) befestigt ist und in ihrem Zentrum Ausschnitte (33) umfasst, welche einen zentralen Bereich (35) begrenzen, welcher durch Balken (34) aufgehängt ist, wobei das bewegbare Element (2) und die Stimulations-Oberfläche (4.1) mit der Platte (32) auf dem Niveau des aufgehängten Bereichs (35) verbunden sind.

14. System zur Simulation nach einem der Ansprüche 1 bis 13, wobei die elektromagnetischen Aktuatoren jeweils einen Solenoiden umfassen und die Position der Stimulations-Oberfläche (4.1) durch den auf die Solenoide eingewirkten Strom bestimmt ist.

15. Virtuelle-Realität-System, umfassend wenigstens ein System zur Simulation nach einem der Ansprüche 1 bis 14, wobei das System tragbar ist und dazu bestimmt ist, an einem Hautbereich befestigt zu werden, so dass der Hautbereich sich in dem Raum verlagern kann, und dass die Stimulations-Oberfläche (4.1) in Kontakt mit dem Hautbereich bleibt, wobei das Virtuelle-Realität-System dazu bestimmt ist, die Fingerkuppe zu stimulieren, umfassend Systeme für jeden der Finger einer Hand und einen Handschuh bildend.

16. System zur taktilen Steuerung, umfassend wenigstens ein System zur Simulation nach einem der Ansprüche 1 bis 15, wobei das System beispielsweise ein taktiler Bildschirm oder ein Touchpad ist.

17. Verfahren zum Steuern eines Virtuelle-Realität-Systems nach Anspruch 15, umfassend wenigstens einen Positionssensor, welcher dem System zur Simulation zugeordnet ist, um die Position des Hautbereichs im Raum bezüglich der zu simulierenden Oberfläche zu erkennen, wobei das Verfahren umfasst:
A - den Schritt eines Messens der Position des Hautbereichs, welcher mit dem System zur Simulation ausgerüstet ist, im Raum,
B - den Schritt eines Einwirkens einer Kraftamplitude auf diesen Bereich, welche durch Steuerung der Aktuatoren eingestellt wird, wobei die eingestellte Kraftamplitude ausgehen von einem zuvor bestimmten Rauhigkeitsprofil bestimmt wird, wobei das Rauhigkeitsprofil jeder Position des Hautbereichs auf der zur simulierenden Oberfläche eine gegebene Kraftamplitude zuordnet,
wobei das Rauhigkeitsprofil bestimmt wird:
- durch Verlagern eines Hautbereichs auf der realen Oberfläche, für welche das Rauhigkeitsprofil erzeugt werden soll,
- durch Messen der durch die reale Oberfläche in dem Hautbereich an jeder Position angewendeten Kraftamplitude, und
- durch Zuordnen der gemessenen Kraftamplitude zu jeder Position.

## Claims

1. System for simulation of a contact with a surface by tactile stimulation comprising a stimulation surface (4.1) that will come into contact with an area of a user's skin, said system comprising means of displacing the stimulation surface along at least one first direction approximately tangent to the area of the skin, said displacement means being controlled as a function of the simulation to be generated, in which said displacement means are electromagnetic actuators (14.1, 14.2, 14.3, 14.4), in which the electromagnetic actuators are distributed around a mobile element (2) supporting the stimulation surface (4.1), and in which each electromagnetic actuator (14.1, 14.2, 14.3, 14.4) comprises a solenoid (18) and a core (20) around which the solenoid (18) is placed, the core being provided with a free face (22) delimiting an air gap with a face (24) of said mobile element(2).

2. Simulation system according to claim 1, in which means of displacing the stimulation surface are also capable of displacing the stimulation surface along a second direction (X, Y) orthogonal to the first direction, and approximately tangent to the skin area.

3. Simulation system according to claim 1 or 2, comprising three electromagnetic actuators arranged on a circle, distributed around a mobile element (2) supporting the stimulation surface (4.1), at 120° from each other.

4. Simulation system according to claim 1 or 2, comprising four electromagnetic actuators (14.1, 14.2, 14.3, 14.4), two actuators (14.1, 14.2) being placed along the first direction of displacement (X) on each side of a mobile element (2) supporting the stimulation surface (4.1) and two actuators (14.3, 14.3) being arranged along the second displacement direction (Y) on each side of the mobile element (2) supporting the stimulation surface (4.1).

5. Simulation system according to one of claims 1 to 4, in which the section of the cores reduces along the direction of the mobile element (2).

6. Simulation system according to one of claims 1 to 5, in which the faces (22, 24) delimiting the air gap of each of the electromagnetic actuators are inclined relative to the plane defined by the first (X) and second (Y) displacement directions, for example by an angle of 25°.

7. Simulation system according to one of claims 1 to 6, in which the stimulation surface (4.1) can move along a third direction (Z) orthogonal to the first (X) and second (Y) directions, said system comprising means of displacement of said stimulation surface along said third direction (Z), the means of displacement along the third direction (Z) being advantageously coincident with the means of displacement along the first (X) and second (Y) directions.

8. Simulation system according to one of claims 1 to 7, comprising a chassis (6) and means of supporting the stimulation surface, said support means being elastically deformable along at least one displacement direction so as to enable displacement of the stimulation surface (4.1) along said direction and to return said stimulation surface into an equilibrium position.

9. Simulation system according to claim 8 combined with claim 3 ou 4, in which the support means are inserted between the chassis and the mobile element (2).

10. Simulation system according to claim 9, in which the support means comprise at least three elastically deformable rods (8), said rods (8) connecting the mobile element (2) and the chassis of the system, the rods (8) being advantageously made of polyurethane or elastomer, for example silicone.

11. Simulation system according to claim 8 or 9, in which the support means comprise at least one first hollow cylindrical element (28) with a rectangular cross-section and longitudinal axis aligned with the first direction (X) and a second hollow cylindrical element (30) with a rectangular cross-section in which the longitudinal axis is in line with the second direction (Y) and is superposed onto the first element and is fixed to it.

12. Simulation system according to claim 8 combined with claim 3, in which the support means are arranged between the mobile element (2) and the stimulation surface, the mobile element (2) being suspended from the support means and the stimulation surface being supported by support means.

13. Simulation system according to claim 12, in which the support means comprise a plate (32) fixed on its periphery to the chassis (6) and comprising cut outs at its centre (33) delimiting a central zone (35) suspended by beams (34), the mobile element (2) and the stimulation surface (4.1) being fixed to said plate (32) at said suspended zone (35).

14. Simulation system according to one of claims 1 to 13, in which each electromagnetic actuator comprises a solenoid, and the position of the stimulation surface (4.1) is determined by the current applied to said solenoids.

15. Virtual reality system comprising at least one simulation system according to any one of claims 1 to 14, said system being portable and designed to be fixed on an area of the skin, such that the area of the skin can move in space and that the stimulation surface (4.1) remains in contact with said area of skin, the virtual reality system being designed to stimulate the digital pulp of fingers, comprising systems for each finger in a hand and forming a glove.

16. Tactile control system comprising at least one simulation system according to one of claims 1 to 15, said system for example being a touch screen or touch pad.

17. Method of controlling a virtual reality system according to claim 15, said method comprising:
A - the step to measure the position of the skin area equipped with the 3-d simulation system,
B - the step to apply a force amplitude adapted by actuator control to said area of skin, said adapted force amplitude being determined from a previously determined roughness profile, said roughness profile relating a given force amplitude to every position of the skin area on the surface to be simulated,
the roughness profile being determined by:
- moving a skin area on the real surface for which the roughness profile is to be made,
- measuring the amplitude of the force applied to said skin area by said real surface at each position, and
- relating the measured force amplitude to each position.
